# EUROPÄISCHE PATENTSCHRIFT

(11) **EP 3 106 346 B1**
(45) Veröffentlichungstag und Bekanntmachung des Hinweises auf die Patenterteilung: **13.10.2021**
(21) Anmeldenummer: 16172868.8
(22) Anmeldetag: 03.06.2016
(51) Int. Cl.: B60Q 1/115, B60Q 1/12, B60Q 1/00

(54) **AUTONOMER AKTOR ZUR EINSTELLUNG EINER LICHTVERTEILUNG EINER BELEUCHTUNGSEINRICHTUNG EINES KRAFTFAHRZEUGS**
AUTONOMOUS ACTUATOR FOR ADJUSTING A LIGHT DISTRIBUTION OF A LIGHTING DEVICE OF A MOTOR VEHICLE
ACTIONNEUR AUTONOME DESTINE A REGLER LA DISTRIBUTION LUMINEUSE D'UN DISPOSITIF D'ECLAIRAGE D'UN VEHICULE AUTOMOBILE

(30) Priorität: 15.06.2015 DE 102015210927
(43) Veröffentlichungstag der Anmeldung: 21.12.2016
(73) Patentinhaber: Automotive Lighting Reutlingen GmbH, 72762 Reutlingen (DE)
(72) Erfinder: Zimmermann, Christian, 72108 Rottenburg (DE); Seibold, Holger, 72805 Lichtenstein (DE); Foster, Henry, 74395 Mundelsheim (DE)
(74) Vertreter: DREISS Patentanwälte PartG mbB

(56) Entgegenhaltungen:
- EP-A1- 2 952 385
- EP-A2- 2 708 417
- DE-A1- 3 048 751
- DE-A1-102006 024 779
- US-A1- 2004 022 063
- US-A1- 2011 133 646
- None

## Beschreibung

Die Erfindung betrifft einen autonomen Aktor zur Variation einer Lichtverteilung einer Beleuchtungseinrichtung eines Kraftfahrzeugs nach dem Oberbegriff des Anspruchs 1.

Aus der DE 197 04 466 A1 ist eine Einrichtung zur Regelung einer Leuchtweite eines Kraftfahrzeugscheinwerfers bekannt. Eine Verstelleinrichtung ist dem Scheinwerfer zugeordnet. In einer bevorzugten Ausführungsform ist eine Sendeeinrichtung, die bei einer durch die Verstelleinrichtung bewirkte Verstellung der Leuchtweite des Scheinwerfers mit verstellt wird, in den Scheinwerfer integriert. Die in einer Sensoreinrichtung erzeugten Signale werden von einer Auswerteeinrichtung verarbeitet, die sich außerhalb des Scheinwerfers befindet.

Aus der DE 60 2006 000 569 T2 ist eine Beleuchtungseinrichtung für Fahrzeuge bekannt, bei der eine Stellgliedsteuerungsvorrichtung separat von Stellgliedern ausgeführt ist.

Die US 2004/0022063 A1 offenbart eine Vorrichtung zur automatischen Anpassung der Position eines Fahrlichts. Die Vorrichtung umfasst einen Aktuator zur Drehung des Fahrlichts um eine Achse parallel zur Fahrbahnoberfläche.

US 2011/133646 A1 offenbart einen Motor zur Verstellung einer Beleuchtungseinheit. Es werden zwei Steuergeräte offenbart.

DE 30 48 751 A1 offenbart eine elektromotorische Stellvorrichtung für Scheinwerfer, welche umfasst: einen Elektromotor, ein Übersetzungsgetriebe und ein Stößel sowie ein Koppelglied

EP 2 708 417 A2 offenbart einen Scheinwerfer für ein Kraftfahrzeug, mit einer elektronischen Steuereinrichtung zum Einstellen der Abstrahlrichtung in Abhängigkeit von Sensorsignalen einer an einem beweglichen Trägerteil angeordneten Beschleunigungssensoreinrichtung.

DE 10 2006 024779 A1 offenbart eine Antriebseinrichtung für ein verschwenkbar in einem Gehäuse gelagerten Lichtmodul. Aufgabe der Erfindung ist es, einen verbesserten Aktor zur Variation einer Lichtverteilung einer Beleuchtungseinrichtung eines Kraftfahrzeugs bereitzustellen.

Die der Erfindung zu Grunde liegende Aufgabe wird nach dem Anspruch 1 gelöst. Vorteilhafte Weiterbildungen sind in den Unteransprüchen angegeben. Wichtige Merkmale für die Erfindung finden sich auch in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmal explizit hingewiesen wird.

Dadurch, dass der Aktor einen Schrittmotor zur Bewegung einer Lichtvariationskomponente und eine Steuereinheit für den Schrittmotor umfasst, wird ein intelligenter Aktor geschaffen, der in Abhängigkeit von dem Fahrzustand des Kraftfahrzeugs die Lichtverteilung ohne zusätzliche Steuerlogik hochdynamisch und autonom variiert. Zusätzliche Steuergeräte außerhalb des Scheinwerfers beziehungsweise der Beleuchtungseinrichtung entfallen, was die Verkabelung im Fahrzeug vereinfacht, Bauraum freigibt und mithin zu Kosteneinsparungen beiträgt. Hierdurch können vorteilhaft auch Fahrzeuge niedrigerer Fahrzeugklassen mit einer Variation der Lichtverteilung durch die Beleuchtungseinrichtung aufgewertet werden. Darüber hinaus können gesetzliche Vorgaben hinsichtlich der Leuchtweitenregulierung zur Verhinderung einer Blendung des Gegenverkehrs vorteilhaft eingehalten werden und dem Fahrer wird eine erhöhte Sicherheit geboten, da seine Sichtweite annähernd konstant gehalten werden kann.

Der Antrieb des Aktors wird mit Elektromotoren realisiert. Dabei können bevorzugt Gleichstrommotoren mit einem geschlossenen Regelkreis oder Schrittmotoren verwendet werden. Zur Anpassung der zu erzeugenden Kräfte verfügt der Antrieb des Aktors über ein spielfreies, selbsthemmendes Getriebe, damit in jeder Fahrsituation gewährleistet wird, dass der Scheinwerfer verstellbar ist oder sicher in der eingestellten Position bleibt.

Dadurch, dass der autonome Aktor in die Beleuchtungseinheit integrierbar ist, kann eine Leuchtweitenregelung durch den Aktor und damit durch den Scheinwerfer autonom durchgeführt werden.

Weitere Merkmale, Anwendungsmöglichkeiten und Vorteile der Erfindung ergeben sich aus der folgenden Beschreibung von Ausführungsbeispielen der Erfindung, die in den Figuren der Zeichnung dargestellt sind. Hierbei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung beziehungsweise in der Zeichnung. Es werden für funktionsäquivalente Größen und Merkmalen in allen Figuren auch bei unterschiedlichen Ausführungsformen die gleichen Bezugszeichen verwendet. Nachfolgend werden beispielhafte Ausführungsformen der Erfindung unter Bezugnahme auf die Zeichnung erläutert. In der Zeichnung zeigen:
Figur 1 ein Kraftfahrzeug mit einem autonomen Aktor;
Figuren 2 bis 4 jeweils einen autonomen Aktor; und
Figur 5 in schematischer Form zwei Aktoren.

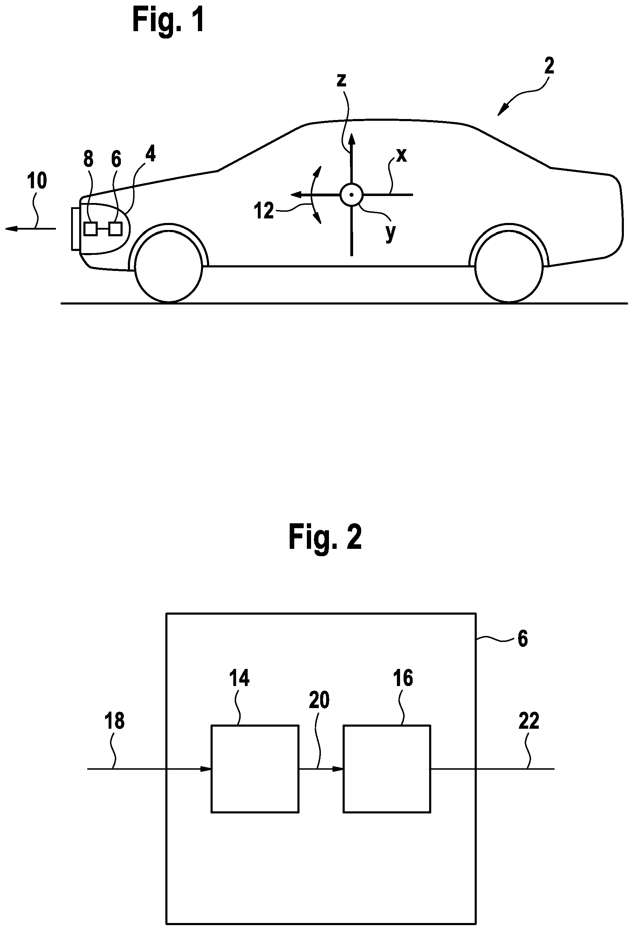

Figur 1 zeigt ein Kraftfahrzeug 2, das mindestens einen vorzugsweise zwei Kraftfahrzeugscheinwerfer 4 aufweist. Das dargestellte Kraftfahrzeug 2 ist als ein vierrädriges Auto ausgebildet, kann aber selbstverständlich auch als Lastkraftwagen, ein motorisiertes Dreirad oder als motorisiertes Zweirad ausgebildet sein. Zur Variation einer Lichtverteilung des Scheinwerfers 4 ist in dem Scheinwerfer 4 ein autonomer Aktor 6 vorgesehen. Der autonome Aktor 6 ist über eine mechanische Verbindung mit einer bewegbaren Lichtvariationskomponente 8 verbunden, die von einer Lichtquelle erzeugtes Licht gemäß einer veränderbaren Lichtverteilung in Fahrtrichtung 10 abstrahlt. Die Lichtquelle weist beispielsweise eine Gasentladungslampe oder eine Leuchtdiode auf.

Die Lichtvariationskomponente 8 kann beispielsweise als verschwenkbares Lichtmodul oder verschwenk- beziehungsweise bewegbare Abblendklappe ausgebildet sein.

Ein Fahrzustand des Kraftfahrzeugs 2 umfasst beispielsweise einen Ist-Nickwinkel 12, der eine Drehung des Kraftfahrzeugs 2 um die y-Achse des Kraftfahrzeugs 2 beispielsweise bei einem Beschleunigen oder Bremsen umfasst.

Figur 2 zeigt eine nicht erfindungsgemäße Ausführungsform des autonomen Aktors 6. Der autonome Aktor 6 umfasst eine Steuereinheit 14, eine Leistungselektronik und einen Schrittmotor 16. Die Steuereinheit 14 ist beispielsweise als Mikrocontroller ausgebildet und umfasst ein digitales Rechengerät und einen Arbeitsspeicher. Selbstverständlich kann anstatt eines Schrittmotors auch ein anderer Antrieb, beispielsweise ein Gleichstrommotor mit einem geschlossenen Regelkreis verwendet werden. Ein spielfreies, selbsthemmendes Getriebe ist zwischen dem Schrittmotor 16 und der Lichtvariationskomponente 8 angeordnet.

Der Steuereinheit 14 wird ein Sensorsignal 18 zugeführt, das außerhalb des autonomen Aktors 6 ermittelt wurde. In Abhängigkeit von dem Sensorsignal 18 erzeugt die Steuereinheit 14 gemäß einer Ablaufsteuerung ein Steuersignal 20, das der Leistungselektronik zugeführt wird. In Abhängigkeit von dem Steuersignal 20 wandelt die Leistungselektronik zugeführte elektrische Energie in ein für den Schrittmotor 16 bestimmtes Spannungssignal um. Die Leistungselektronik führt dem Schrittmotor 16 das Spannungssignal zu. Der Schrittmotor 16 verstellt gemäß dem Spannungssignal mittels einer mechanischen Verbindung 22 die Lichtvariationskomponente 8. Die mechanische Verbindung 22 ist in nicht gezeigter Form mit der Lichtvariationskomponente 8 zu dessen Verstellung und zur Variation der Lichtverteilung der Beleuchtungseinrichtung 4 verbunden. Die Steuereinheit 14 ist bevorzugt als Mikrocontroller ausgebildet.

Die Steuereinheit 14 und die Leistungselektronik sind bevorzugt auf einer gemeinsamen Leiterplatte angeordnet, um so sowohl Bauraum als auch Herstellungskosten einzusparen. Durch die gemeinsame Anordnung der Leistungselektronik und der Steuereinheit 14 auf der Leiterplatte ist es vorteilhaft möglich, die Leiterstrecke zwischen der Steuereinheit 14, der Leistungselektronik und dem Motor 16 zu verkürzen, was sich vorteilhaft hinsichtlich elektromagnetischer Störungen bzw. elektromagnetischer Verträglichkeit auswirkt. Ebenso werden durch die so verkürzte Leiterstrecke Kosten eingespart und gleichzeitig die Ausfallsicherheit erhöht. Der Schrittmotor 16 ermöglicht eine hochdynamische Variation der Lichtverteilung während der Fahrt des Kraftfahrzeugs.

Das Sensorsignal 18 wird beispielsweise von einem weiteren Steuergerät oder einem weiteren Sensor erzeugt, wobei das weitere Steuergerät und der entsprechende Sensor auch außerhalb des Scheinwerfers 4 angeordnet sein können. Des Weiteren kann in nicht gezeigter Form der Sensor, der das Sensorsignal 18 erzeugt, mittels des autonomen Aktors 6 über eine entsprechende Versorgungsleitung mit elektrischer Energie versorgt werden. Bei dem Sensorsignal 18 handelt es sich beispielsweise um eine Einfederung des Fahrzeugs 2 in Form des Ist-Nickwinkels 12, um eine Beschleunigung in z-Richtung, in x-Richtung also in Fahrzeuglängsrichtung oder ein ähnliches Signal. Insbesondere kann das Sensorsignal 18 von einem Achssensor erzeugt werden, wobei ein Achssensor im Bereich der Fahrzeugachsen beispielsweise der Hinter- und/oder Vorderachse angeordnet ist. Der Ist-Nickwinkel 12 kann beispielsweise durch einen Vergleich von Sensorsignalen, die von der Vorder- und der Hinterachse stammen, insbesondere aus einer Differenz der beiden Achssignale, ermittelt werden.

In einer Ausführungsform sind zu beiden Frontseiten des Kraftfahrzeugs 2 zwei autonome Aktoren 6 angeordnet, die jeweils mit dem Sensorsignal 18 beaufschlagt werden. Damit wird ein ausfallresistentes System mit erhöhter Funktionssicherheit geschaffen, da bei einem Ausfall eines der beiden autonomen Aktoren 6 der jeweils andere Aktor 6 übernimmt.

Zum Empfang des Sensorsignals 18 weist der autonome Aktor 6 in nicht gezeigter Form eine Schnittstelle auf, die ein analoges Signal, ein pulsweitenmoduliertes Signal oder ein Signal eines Bussystems empfängt und der Steuereinheit 14 zuführt.

Selbstverständlich kann der autonome Aktor 6 auch eine Ausgangsschnittstelle aufweisen, um beispielsweise Fehlermeldungen oder ähnliches der weiteren Fahrzeugelektronik zu signalisieren.

Der Aktor 6 wird deshalb als autonom bezeichnet, da der Aktor 6 selbstständig mit Hilfe der Steuereinheit 14 Entscheidungen zum Betrieb des Schrittmotors 16 trifft.

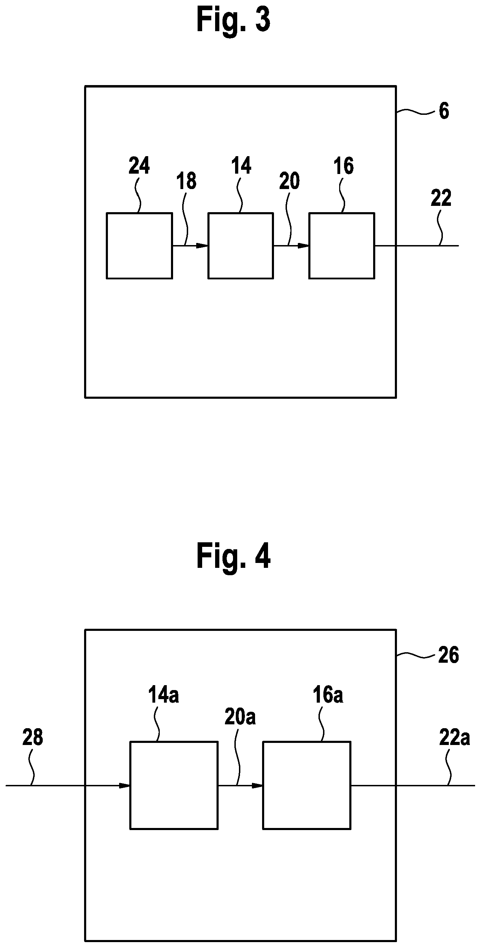

Figur 3 zeigt eine erfindungsgemäße Ausführungsform des autonomen Aktors 6, wobei im Unterschied zu Figur 2 das Sensorsignal 18 innerhalb des autonomen Aktors 6 durch einen Sensor 24 erzeugt wird. Der Sensor 24 misst beispielsweise eine Beschleunigungsrate in x-Richtung und/oder z-Richtung. Selbstverständlich können auch mehrere Sensoren 24 zur Ermittlung eines Ist-Nickwinkels 12 oder einer entsprechenden Größe verwendet werden.

In einer nicht gezeigten, erfindungsgemäße Ausführungsform umfasst der autonome Aktor 6 sowohl einen Sensor 24 als auch eine Eingangsschnittstelle für ein weiteres Sensorsignal. Die Steuereinheit 14 ist derart ausgebildet, um das Sensorsignal 18 des Sensors 24 und das weitere Sensorsignal, das über die Eingangsschnittstelle zugeführt wird, zu verarbeiten und in Abhängigkeit von dem Sensorsignal 18 und dem weiteren Sensorsignal die Lichtverteilung der Beleuchtungseinrichtung mittels des Schrittmotors 16 einzustellen.

In einer weiteren Ausführungsform des autonomen Aktors 6 umfasst der Fahrzustand eine Ist-Geschwindigkeit des Kraftfahrzeugs 2 und einen Lenkwinkel des Kraftfahrzeugs 2. Die Ist-Geschwindigkeit und der Ist-Lenkwinkel werden der Steuereinheit 14 des autonomen Aktors 6 zugeführt. Der Schrittmotor 16 wird mittels der Steuereinheit 14 und in Abhängigkeit von der Ist-Geschwindigkeit und dem Ist-Lenkwinkel derart betrieben, so dass durch eine Drehung der Lichtvariationskomponente um eine Parallele zur z-Achse die Lichtverteilung einer Kurvenfahrt des Kraftfahrzeugs 2 im Wesentlichen folgt.

Figur 4 zeigt in schematischer Form einen Slave-Aktor 26 zur Variation einer Lichtverteilung einer weiteren Beleuchtungseinrichtung eines Kraftfahrzeugs. Hierbei sind die in Figur 2 und 3 erläuterten autonomen Aktoren 6 als Master-Aktor ausgebildet, um, verbunden mit dem Slave-Aktor 26, den Slave-Aktor 26 mittels eines dem Slave-Aktor 26 zugeführten Master-Signals 28 zu betreiben. Das Master-Signal 28 wird von dem Master-Aktor 6 in nicht gezeigter Form in den Figuren 2 und 3 erzeugt. Bei dem Master-Signal 28 kann es sich beispielsweise um das Sensorsignal 18, das Antriebssignal 20 oder aber um ein anderes von der Steuereinheit 14 erzeugtes Signal handeln.

Der Slave-Aktor 26 weist eine weitere Steuereinheit 14a und einen weiteren Schrittmotor 16a auf, wobei die weitere Steuereinheit 14a ein weiteres Antriebssignal 20a dem weiteren Schrittmotor 16a zuführt. Eine weitere mechanische Verbindung 22a ist mit einer weiteren Lichtvariationskomponente zur Variation der Lichtverteilung verbunden.

Die Aktoren 6 und 26 sind jeweils in die zugeordnete Beleuchtungseinrichtung 4 integrierbar. Hierbei ist unter der Integrierbarkeit zu verstehen, dass der autonome Aktor 6, 26 innerhalb des Gehäuses der Beleuchtungseinrichtung befindet. Selbstverständlich kann der Aktor 6, 26 auch außerhalb oder teilweise außerhalb des Gehäuses der Beleuchtungseinrichtung angeordnet sein.

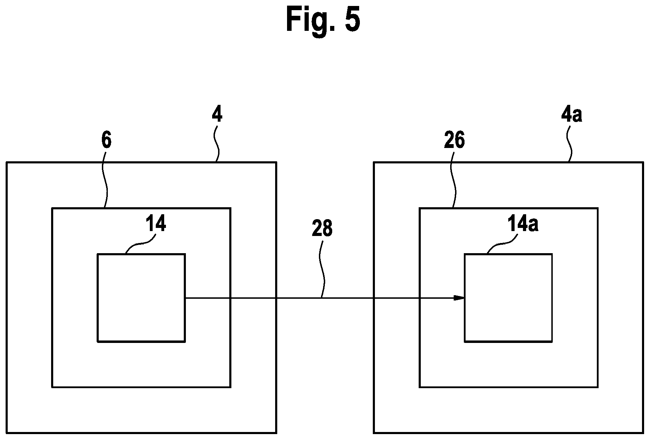

Figur 5 zeigt beispielhaft den Scheinwerfer 4 und einen weiteren Scheinwerfer 4a. Der Scheinwerfer 4 umfasst den Master-Aktor 6 mit der Steuereinheit 14. Der weitere Scheinwerfer 4a umfasst den Slave-Aktor 26 mit der weiteren Steuereinheit 14a. In einer anderen Ausführungsform kann selbstverständlich der Slave-Aktor 26 derart ausgestaltet sein, dass das Mastersignal 28 direkt dem weiteren Schrittmotor 16a zugeführt wird.

In einer zur Figur 5 alternativen Ausführungsform sind zwei Scheinwerfer des Kraftfahrzeugs mit jeweils autonomen Aktoren 6 ausgebildet, die zumindest in keiner direkten Verbindung zu einem Datenaustausch stehen und gemäß den Figuren 2 und/oder 3 ausgebildet sind.

## Patentansprüche

1. Ein autonomer Aktor (6) zur Variation einer Lichtverteilung einer Beleuchtungseinrichtung (4) eines Kraftfahrzeugs (2), wobei der Aktor (6) zur Einstellung der Lichtverteilung mit einer bewegbaren Lichtvariationskomponente (8) verbindbar ist, wobei der Aktor (6; 26) einen Antrieb (16) zur Bewegung der Lichtvariationskomponente (8), eine Leistungselektronik für den Antrieb (16) und eine Steuereinheit (14) für die Leistungselektronik umfasst, und wobei die Steuereinheit (14) derart ausgestaltet ist, um die Lichtverteilung der Beleuchtungseinrichtung (4) in Abhängigkeit von einem Fahrzustand einzustellen, **dadurch gekennzeichnet, dass** der Aktor (6) ein spielfreies, selbsthemmendes Getriebe zwischen dem Antrieb (16) und der Lichtvariationskomponente (8) umfasst, dass der Aktor (6) einen Sensor (24) zur Ermittlung des Fahrzustands des Fahrzeuges umfasst, dass der Fahrzustand durch die Steuereinheit (14) in Abhängigkeit vom Sensorsignal (18) des Sensors (24) ermittelbar ist, wobei der Aktor optional zusätzlich eine Eingangsschnittstelle für ein weiteres Sensorsignal eines weiteren Sensors zur Ermittlung des Fahrzustands aufweist.

2. Der Aktor (6) nach Anspruch 1, wobei der Aktor (6) in die Beleuchtungseinrichtung (4) integrierbar ist.

3. Der Aktor (6; 26) nach Anspruch 1 oder 2, wobei der Fahrzustand einen Ist-Nickwinkel (12) des Kraftfahrzeugs (2) umfasst, wobei die Lichtverteilung eine Leuchtweite umfasst, und wobei der Antrieb (16) mittels der Steuereinheit (14) derart betreibbar ist, so dass eine Bewegung der Lichtvariationskomponente (8) dem Ist-Nickwinkel (12) entgegenwirkt.

4. Der Aktor (6) nach einem der vorstehenden Ansprüche, der als Master-Aktor zur Verbindung mit einem Slave-Aktor (26) ausgebildet ist.

5. Der Aktor (6) nach einem der vorstehenden Ansprüche, welcher als Master-Aktor ausgebildet ist, mit einem Slave-Aktor (26) zur Variation einer Lichtverteilung einer weiteren Beleuchtungseinrichtung (4) eines Kraftfahrzeugs, wobei der Slave-Aktor (26) mit dem Master-Aktor (6) nach dem vorstehenden Anspruch verbindbar ist

6. Der Aktor (6) und der Slave-Aktor (26) nach Anspruch 5, wobei ein Master-Signal (28) von dem Master-Aktor (6) empfangbar ist, wobei dem Slave-Aktor (26) eine weitere, bewegbare Lichtvariationskomponente (8) zugeordnet ist, wobei der Slave-Aktor (26) einen weiteren Antrieb (16a) zur Bewegung der weiteren Lichtvariationskomponente (8) und eine weitere Steuereinheit (14a) für den weiteren Antrieb (16a) umfasst, und wobei die weitere Steuereinheit (14a) derart ausgestaltet ist, um die Lichtverteilung der weiteren Beleuchtungseinrichtung (4) in Abhängigkeit von dem Master-Signal (28) einzustellen

7. Eine Beleuchtungseinrichtung (4) für eine Kraftfahrzeug umfassend den Aktor (6) und den Slave-Aktor (26) nach einem den Ansprüche 5 oder 6.

8. Die Beleuchtungseinrichtung (4) nach Anspruch 7, wobei die Aktoren (6; 26) in einem jeweiligen Gehäuse der Beleuchtungseinrichtung (4) angeordnet ist.

## Claims

1. Autonomous actuator (6) for varying a light distribution of an illumination device (4) of a motor vehicle (2), the actuator (6) being connectable to a movable light variation component (8) for adjusting the light distribution, the actuator (6; 26) comprising a drive (16) for moving the light variation component (8), power electronics for the drive (16) and a control unit (14) for the power electronics, and the control unit (14) being designed in such a way as to adjust the light distribution of the illumination device (4) depending on a driving state, **characterized in that** the actuator (6) comprises a backlash-free, self-locking gearing between the drive (16) and the light variation component (8), that the actuator (6) comprises a sensor (24) for determining the driving state of the vehicle, that the driving state can be determined by the control unit (14) depending on the sensor signal (18) from the sensor (24), the actuator optionally additionally having an input interface for a further sensor signal from a further sensor for determining the driving state.

2. Actuator (6) according to claim 1, wherein the actuator (6) can be integrated into the illumination device (4).

3. Actuator (6; 26) according to claim 1 or claim 2, wherein the driving state comprises an actual pitch angle (12) of the motor vehicle (2), wherein the light distribution comprises a headlight range and wherein the drive (16) can be operated by means of the control unit (14) in such a way that a movement of the light variation component (8) counteracts the actual pitch angle (12).

4. Actuator (6) according to any of the preceding claims, which is designed as a master actuator for connection to a slave actuator (26).

5. Actuator (6) according to any of the preceding claims, which is designed as a master actuator, having a slave actuator (26) for varying a light distribution of a further illumination device (4) of a motor vehicle, wherein the slave actuator (26) can be connected to the master actuator (6) according to the preceding claim.

6. Actuator (6) and the slave actuator (26) according to claim 5, wherein a master signal (28) can be received by the master actuator (6), wherein a further movable light variation component (8) is associated with the slave actuator (26), wherein the slave actuator (26) comprises a further drive (16a) for moving the further light variation component (8) and a further control unit (14a) for the further drive (16a), and wherein the further control unit (14a) is designed in such a way as to adjust the light distribution of the further illumination device (4) depending on the master signal (28) .

7. Illumination device (4) for a motor vehicle comprising the actuator (6) and the slave actuator (26) according to claim 5 or claim 6.

8. Illumination device (4) according to claim 7, wherein the actuators (6; 26) are arranged in a relevant housing of the illumination device (4).

## Revendications

1. Actionneur autonome (6) permettant de faire varier la répartition lumineuse d'un appareil d'éclairage (4) d'un véhicule automobile (2), l'actionneur (6) pouvant être relié à un composant de variation de lumière (8) mobile afin d'ajuster la répartition lumineuse, l'actionneur (6; 26) comprenant un entraînement (16) permettant de déplacer le composant de variation de lumière (8), une électronique de puissance destinée à l'entraînement (16) et une unité de commande (14) destinée à l'électronique de puissance, et l'unité de commande (14) étant conçue de manière à ajuster la répartition lumineuse de l'appareil d'éclairage (4) en fonction d'un état de conduite, **caractérisé en ce que** l'actionneur (6) comprend une transmission autobloquante sans jeu entre l'entraînement (16) et le composant de variation de lumière (8), **en ce que** l'actionneur (6) comprend un capteur (24) permettant de déterminer l'état de conduite du véhicule, **en ce que** l'état de conduite peut être déterminé grâce à l'unité de commande (14) en fonction du signal de capteur (18) du capteur (24), l'actionneur (6) présentant éventuellement en outre une interface d'entrée destinée à un signal de capteur supplémentaire d'un capteur supplémentaire pour déterminer l'état de conduite.

2. Actionneur (6) selon la revendication 1, l'actionneur (6) pouvant être intégré dans l'appareil d'éclairage (4) .

3. Actionneur (6; 26) selon la revendication 1 ou 2, l'état de conduite comprenant un angle de tangage réel (12) du véhicule automobile (2), la répartition lumineuse comprenant une plage d'éclairage, et l'entraînement (16) pouvant être actionné au moyen de l'unité de commande (14) de telle manière qu'un mouvement de la composante de variation de lumière (8) s'opère à l'encontre de l'angle de tangage réel (12).

4. Actionneur (6) selon l'une quelconque des revendications précédentes, réalisé sous la forme d'un actionneur-maître destiné à être relié à un actionneur-esclave (26) .

5. Actionneur (6) selon l'une quelconque des revendications précédentes, réalisé sous la forme d'un actionneur-maître, avec un actionneur-esclave (26) permettant de faire varier une répartition de lumière d'un appareil d'éclairage (4) supplémentaire d'un véhicule automobile, l'actionneur-esclave (26) pouvant être relié à l'actionneur-maître (6) selon la revendication précédente.

6. Actionneur (6) et actionneur-esclave (26) selon la revendication 5, un signal-maître (28) pouvant être reçu par l'actionneur-maître (6), un composant de variation de lumière (8) mobile supplémentaire étant associé à l'actionneur-esclave (26), l'actionneur-esclave (26) comprenant un entraînement (16a) supplémentaire permettant de déplacer le composant de variation de lumière (8) supplémentaire, et une unité de commande (14a) supplémentaire destinée à l'entraînement (16a) supplémentaire, et l'unité de commande (14a) supplémentaire étant conçue de manière à ajuster la répartition lumineuse de l'appareil d'éclairage (4) supplémentaire en fonction du signal-maître (28).

7. Appareil d'éclairage (4) destiné à un véhicule automobile comprenant l'actionneur (6) et l'actionneur-esclave (26) selon la revendication 5 ou 6.

8. Appareil d'éclairage (4) selon la revendication 7, dans lequel les actionneurs (6; 26) sont agencés dans un logement respectif de l'appareil d'éclairage (4).
